# EUROPÄISCHE PATENTSCHRIFT

(11) **EP 0 699 462 B1**
(45) Veröffentlichungstag und Bekanntmachung des Hinweises auf die Patenterteilung: **05.04.2000**
(21) Anmeldenummer: 95108998.6
(22) Anmeldetag: 12.06.1995
(51) Int. Cl.: B01D 17/022

(54) **Einrichtung zum Trennen von Flüssigkeiten unterschiedlicher Dichte**
Device for separating liquids of different densities
Dispositif pour séparer des liquides de densités différentes

(30) Priorität: 03.09.1994 DE 4431496
(43) Veröffentlichungstag der Anmeldung: 06.03.1996
(73) Patentinhaber: FILTERWERK MANN & HUMMEL GMBH, 71631 Ludwigsburg (DE)
(72) Erfinder: Brockhoff, Franz-Ulrich, (DE); Kolitz, Eberhard, D-74321 Bietigheim (DE); Wolf, Michael, D-71126 Gäufelden (DE)
(74) Vertreter: Voth, Gerhard, Dipl.-Ing.

(56) Entgegenhaltungen:
- EP-A- 0 264 877
- EP-A- 0 585 689
- DE-B- 1 123 068
- DE-U- 7 721 542
- FR-A- 2 375 890
- GB-A- 1 557 965

## Beschreibung

Die Erfindung betrifft eine Einrichtung zum Trennen von Flüssigkeiten unterschiedlicher Dichte gemäß dem Hauptanspruch.

Aus der US-PS 46 50 581 ist eine Einrichtung zum Trennen von Emulsionen oder Flüssigkeiten unterschiedlicher Dichte bekannt. Diese besteht aus einem Koalescer der an einem Behälter angeordnet ist. Der Behälter ist mit einem oberen und einem unteren Ablaufrohr versehen. Über diese Ablaufrohre können die entmischten Flüssigkeiten abgezogen werden.

Ein Nachteil dieser Einrichtung ist darin zu sehen, daß Behälter und Koalescer eine Einheit bilden, die eine sehr ungünstige äußere Struktur aufweist.

Ein weiterer Nachteil besteht darin, daß es nicht möglich ist, diese Einrichtung an unterschiedliche Anforderungen bezüglich der Durchflußmenge und bezüglich des Mischungsverhältnisses der zu trennenden Flüssigkeiten anzupassen.

Das bekannte System benötigt sehr viel Bauraum. Einzelne Elemente lassen sich nicht oder nur mit unverhältnismäßig hohem Aufwand austauschen.

Es ist weiterhin aus der US-PS 43 35 001 ein Verfahren und eine Einrichtung zum Trennen von Emulsion bekannt. Bei diesem Verfahren wird ein Behälter benutzt, in welchem der Koalescer integriert ist.

Auch bei dieser Einrichtung besteht der Nachteil, daß Behälter und Koalescer eine bauliche Einheit bilden und eine Anpassung an verschiedene Betriebsbedingungen nicht möglich ist.

Außerdem ist der Austausch des Koalescers nur möglich, wenn der gesamte Behälter entleert wird. Dies bedeutet, daß das Trennverfahren unterbrochen werden muß.

Aus der GB-A-1557965 ist eine Einrichtung bekannt, die mehrere Koaleszenzelemente aufweist. Vorgesehen ist ein Sammelbehälter, von dem aus vier Öffnungen zu vier Koaleszenzelemente führen und von dort die getrennten Flüssigkeiten jeweils über entsprechende Auslaufvorrichtungen austreten. Ein Nachteil dieser Einrichtung besteht darin, daß eine Vielzahl von Auffangvorrichtungen bzw. Verbindungsleitungen erforderlich ist. Ein Austausch eines Koaleszenzelements wird erheblich erschwert, da verschiedene Rohranschlüsse entfernt werden müssen. Außerdem ist das Anwendungsgebiet dieser Einrichtung aufgrund des starren vorgegebenen Aufbaus eingeschränkt.

Der Erfindung liegt deshalb die Aufgabe zugrunde, eine Einrichtung zum Trennen von Flüssigkeiten unterschiedlicher Dichte zu schaffen, die für eine Vielfalt von Anwendungsgebieten geeignet ist und sich an die unterschiedlichsten Betriebsbedingungen in einfacher Weise anpassen läßt.

Diese Aufgabe wird durch den Hauptanspruch gelöst.

Das Trennen von Flüssigkeiten unterschiedlicher Dichte ist dann möglich, wenn eine der Flüssigkeiten in disperser Phase vorliegt, das heißt, emulgiert ist. Dabei kann die disperse Phase leichter oder schwerer als die zusammenhängende Phase sein.

Ein Vorteil der Erfindung ist darin zu sehen, daß die Einrichtung anwendungsvariabel ist. So ist beispielsweise eine Heizöl-, bzw. Diesel-, Wassertrennung möglich. Außerdem können durch diese Einrichtung übliche Leichtflüssigkeitstrennbecken ersetzt werden. Der Vorteil liegt hier in dem wesentlich kleineren Bauvolumen sowie in einer schnellen Trennung.

Grundsätzlich sind alle Mischflüssigkeiten die sich im nicht gelösten Zustand befinden mit dieser Einrichtung trennbar.

Ein weiterer Vorteil der Erfindung ist darin zu sehen, daß aufgrund der Modulbauweise die Einrichtung an verschiedenen Betriebsbedingungen adaptierbar ist.

Außerdem besteht die Möglichkeit, diese Einrichtung mit weiteren Elementen zu kombinieren.

Gemäß der Erfindung ist die Einrichtung mit zwei Koaleszenzelementen versehen. Zweckmäßigerweise sind die Koaleszenzelemente über eine Umschalteinrichtung mit dem Behälter verbunden. Damit besteht die Möglichkeit, während des Trennverfahrens eines der Koaleszenzelemente auszutauschen.

Selbstverständlich besteht auch die Möglichkeit, ein erstes oder mehrere erste Koaleszenzelemente, die von Zeit zu Zeit ausgetauscht werden müssen, außerhalb des Behälters anzuordnen und in dem Behälter ein zweites Koaleszenzelement anzuordnen, das nur selten oder nicht ausgetauscht werden muß.

In Sonderfällen ist es erforderlich, mehr als zwei Flüssigkeiten unterschiedlicher Dichte zu trennen. Hierzu kann an dem Behälter ein dritter Auslauf vorgesehen sein. Dieser dritte Auslauf ist in dem Bereich angeordnet, in dem sich die Flüssigkeit mittlerer Dichte ansammelt. Zweckmäßigerweise ist dieser Auslauf mit einem Ventil versehen, dieses wird nur geöffnet, wenn es erforderlich ist, das heißt, wenn diese Flüssigkeit aus dem Behälter zu entfernen ist.

Eine weitere Ausgestaltung der Erfindung sieht vor, ein Vorfilter vorzuschalten, so daß die zu trennende Flüssigkeit zunächst mechanisch gereinigt wird. Auch dieses Vorfilter ist in Modulbauweise aufgebaut, das heißt, dieses Vorfilter ist ein Modul oder Element, das je nach Anwendungszweck an die Einrichtung gekoppelt werden kann.

Eine weitere vorteilhafte Ergänzung der Einrichtung läßt sich mit einem Luftvorabscheider erreichen. Insbesondere bei der Anwendung der Flüssigkeitstrennung bei ölüberfluteten Schraubenverdichtern können geringe Mengen von Luft mit der zu trennenden Flüssigkeit in die Einrichtung gelangen. Wird diese Luft über einen Luftvorabscheider entfernt, dann läßt sich die Effizienz der Flüssigkeitstrennung erhöhen.

Sofern die zu trennende Flüssigkeit drucklos der Einrichtung zugeführt wird, ist es zweckmäßig, eine Flüssigkeitspumpe vorzusehen, welche einen für die Trennung erforderlichen Flüssigkeitsdruck erzeugt.

Selbstverständlich gibt es noch eine Vielzahl von weiteren Kombinationsmöglichkeiten. So kann die Einrichtung beispielsweise mit einem Kondensatabscheider oder einem Kondensatableiter kombiniert werden. Ebenso ist die Kombination mit nachgeschalteten Feinfiltern oder Aktivkohlefiltern möglich. Aufgrund der kompakten Bauweise der Einrichtung kann diese auch als freistehendes Gerät, das heißt im mobilen Einsatz angewendet werden. Auch der Koaleszenzabscheider selbst kann entsprechend dem Anwendungsfall mit unterschiedlichen Koalescerelementen ausgestattet sein. So ist beispielsweise die Anwendung von Glasfaserpapier, PE-Sinterkörper, Glaswatte, Kunststoff-Fasern usw. möglich.

Zur Führung der Flüssigkeit mit der geringeren Dichte innerhalb des Behälters, hat es sich als zweckmäßig erwiesen, einen Steigzylinder oder ein Steigrohr anzuordnen. Ein solcher Steigzylinder ist beispielsweise mit einem Sieb ausgestatttet und dient zur Beruhigung der aufsteigenden leichteren Flüssigkeit. Dieser Steigzylinder ist lösbar mit dem Behälter verbunden.

Es besteht weiterhin die Möglichkeit, an die Einrichtung ein Durchflußbegrenzer anzukoppeln. Damit wird insbesondere bei sehr stark schwankenden Durchflußmengen die Qualität der Trennung erhalten.

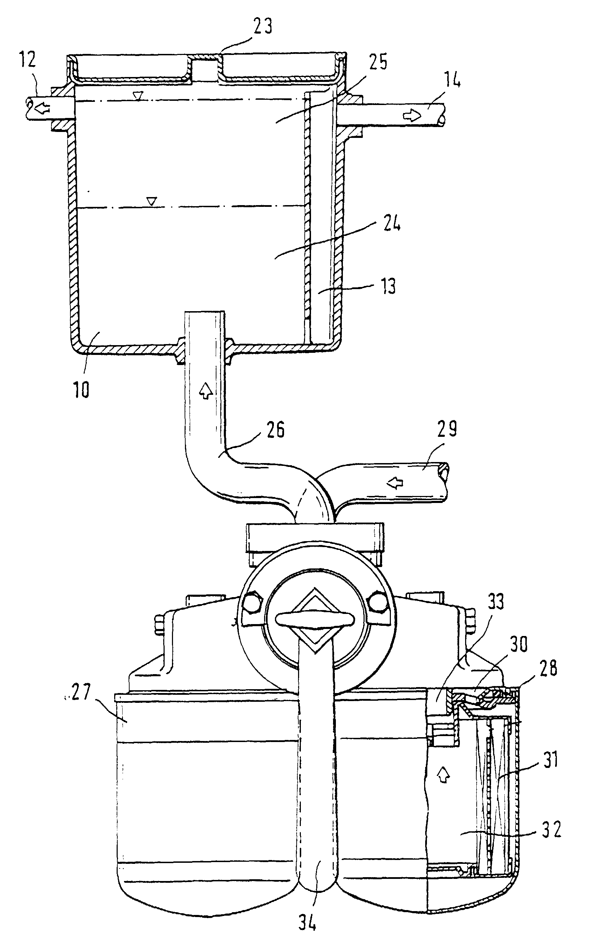

Ein Ausführungsbeispiel der Erfindung ist in der Zeichnung dargestellt und wird im folgenden näher erläutert.

Die Zeichnung zeigt eine modulartig aufgebaute Einrichtung zum Trennen von Flüssigkeiten.

Die Figur zeigt eine Einrichtung zum Trennen von Flüssigkeiten. Der Flüssigkeitsbehälter 10 mit seinem ersten Auslauf 12, dem Auslaufkanal 13 und dem zweiten Auslauf 14 ist, wie dargestellt, im unteren Bereich mit einer Flüssigkeit 24 höherer Dichte und im oberen Bereich mit einer Flüssigkeit geringerer Dichte gefüllt. Der Behälter ist mit einer Abschlußplatte 23 versehen. Am Boden des Behälters befindet sich eine Zuführleitung 26. An diese Zurführleitung ist über einen Umschalthahn 34 ein erstes Koaleszenzelement 27 und ein zweites Koaleszenzelement 28 verbunden. Beide Koaleszenzelemente sind im Aufbau dem eines Wechselfilters ähnlich. Die zu trennende Flüssigkeit gelangt über die Leitung 29 zu einem der beiden Elemente, zum Beispiel zu dem Koaleszenzelement 28, strömt von dort aus über den Raum 30 in den anschließenden Koalescer, das heißt, in diesem Fall eine Glasfaserwicklung 31. Dort koagulieren die Tröpfchen einer der beiden Flüssigkeiten zu größeren Tropfen. Beide Flüssigkeiten gelangen anschließend über den Innenbereich 32 und die Austrittsöffnung 33 zu der Zuführleitung 26. Sollte eines der beiden Koaleszenzelemente 27 oder 28 ausgetauscht werden, so ist dieses von dem Flüssigkeitsdurchlauf mittels des Umschalthahns 34 abzukoppeln, das heißt, die Flüssigkeit durchströmt anschließend das andere Koaleszenzelement.

## Patentansprüche

1. Einrichtung zum Trennen von Flüssigkeiten unterschiedlicher Dichte mit einem Behälter der eine Zuführleitung (26, 29) und wenigstens zwei Auslauföffnungen (12, 14) aufweist, wobei an dem Behälter (10) zwei Koaleszenzelemente (27, 28) vorgesehen sind und wobei der Behälter (10) und die Koaleszenzelemente (27, 28) in Modulbauweise aufgebaut sind, dadurch gekennzeichnet, daß die Koaleszenzelemente (27, 28) an der Zuführleitung (26, 29) dem Behälter vorgeschaltet sind und die Zuführleitung (26, 29) mit einer Umschalteinrichtung (34) versehen ist, sodaß die zu trennende Flüssigkeit zu einem der beiden Elemente gelangt während das zweite Element mittels der Umschalteinrichtung (34) angekoppelt ist.

2. Einrichtung nach Anspruch 1, dadurch gekennzeichnet, daß außerhalb des Behälters ein Vorfilter für die zu trennende Flüssigkeit vorgesehen ist.

3. Einrichtung nach einem der vorherigen Ansprüche, dadurch gekennzeichnet, daß ein Luftvorabscheider und/oder eine Flüssigkeitspumpe vorgesehen ist.

4. Einrichtung nach einem der vorherigen Ansprüche, dadurch gekennzeichnet, daß die getrennte Flüssigkeit einem Feinfilter und/oder einem Aktivkohlefilter zuführbar ist.

## Revendications

1. Installation pour séparer des liquides de densités différentes, comprenant un réservoir muni d'une conduite d'alimentation (26, 29) et d'au moins deux orifices de sortie (12, 14),
le réservoir (10) ayant deux éléments à coalescence (27, 28) et
le réservoir (10) et les éléments à coalescence (27, 28) sont de construction modulaire,
caractérisée en ce que
les éléments à coalescence (27, 28) sont montés en amont du réservoir dans la conduite d'alimentation (26, 29) et celle-ci comporte une installation de commutation (34) pour que le liquide à séparer arrive sur l'un des deux éléments pendant que le second élément est coupé par l'installation de commutation (34).

2. Installation selon la revendication 1,
caractérisée en ce qu'
en dehors du réservoir il est prévu un filtre amont pour le liquide à séparer.

3. Installation selon l'une des revendications précédentes,
caractérisée par
un séparateur d'air, en amont et/ou une pompe à liquide.

4. Installation selon l'une quelconque des revendications précédentes,
caractérisée en ce que
le liquide séparé est conduit dans un filtre fin et/ou un filtre à charbon actif.

## Claims

1. Apparatus for separating liquids of different densities, including a container which has a feed pipe (26, 29) and at least two discharge openings (12, 14), two coalescing devices (27, 28) being provided on the container (10), and the container (10) and the coalescing devices (27, 28) being constructed in a modular type of construction, characterised in that the coalescing devices (27, 28) are disposed in the feed pipe (26, 29) upstream of the container, and the feed pipe (26, 29) is provided with a switchover arrangement (34), so that the liquid to be separated passes to one of the two devices, while the second device is disconnected by means of the switchover arrangement (34).

2. Apparatus according to claim 1, characterised in that a preliminary filter for the liquid to be separated is provided externally of the container.

3. Apparatus according to one of the previous claims, characterised in that a preliminary air separator and/or a hydraulic pump is provided.

4. Apparatus according to one of the previous claims, characterised in that the separated liquid is suppliable to a fine-mesh filter and/or to an active carbon filter.
